# EUROPÄISCHE PATENTSCHRIFT

(11) **EP 0 686 700 B1**
(45) Veröffentlichungstag und Bekanntmachung des Hinweises auf die Patenterteilung: **21.03.2001**
(21) Anmeldenummer: 95108278.3
(22) Anmeldetag: 31.05.1995
(51) Int. Cl.: C21C 5/36, C21C 5/44, C21C 7/076, C21B 7/06, C04B 35/66

(54) **Titanhaltiger Zuschlagstoff und dessen Verwendung zur Erhöhung der Haltbarkeit der feuerfesten Ausmauerung eines Ofens und als Schlackenbildner**
Titanium containing additive and its use for increasing the durability of a furnace refractory lining or as a slag former
Agent d'addition contenant du titane et utilisation de ce produit pour améliorer la durabilité du revêtement réfractaire d'un four ou comme agent de scorification

(30) Priorität: 07.06.1994 DE 4419816
(43) Veröffentlichungstag der Anmeldung: 13.12.1995
(73) Patentinhaber: Sachtleben Chemie GmbH, 47198 Duisburg (DE)
(72) Erfinder: Amirzadeh-Asl, Djamschid, Dr., D-47445 Moers (DE); Fünders, Dieter, Dr., D-47198 Duisburg (DE)
(74) Vertreter: Uppena, Franz, Dr.

(56) Entgegenhaltungen:
- BE-A- 623 238
- DE-C- 900 817
- DE-C- 4 304 724
- LU-A- 46 706
- STAHL UND EISEN, Bd. 100, Nr. 17, 25.August 1980, DUSSELDORF DE, Seite 1037 XP002023684 "Titania Slag for Improving Blast Furnace Hearth Lining Life"

## Beschreibung

Die Erfindung betrifft einen titanhaltigen Zuschlagstoff für die Zufuhr in Öfen mit feuerfester Ausmauerung für schmelzmetallurgische Prozesse, bestehend aus Rückständen der TiO₂-Herstellung und gegebenenfalls einem oder mehreren Bindemitteln, aus Portlandzement, Hochofenzement, Tonerdezement, Flugasche oder Elektrofilterasche und sonstigen hydraulischen, keramischen oder chemischen Bindemitteln.

Als Zuschlagstoff für Öfen in der Eisen-, Stahl- und Gießerei-Industrie, insbesondere für Hochöfen, werden größere Mengen natürlichen Ilmenits als Titanträger verwendet. Üblicherweise wird der natürliche Ilmenit in Stücke mit einer Größe von etwa 50 mm zerkleinert und direkt in die Öfen gegeben. Die Zugabe von Ilmenit bewirkt, daß der im Roheisen vorhandene Stickstoff in Form von Titannitriden und Titancarbonitriden gebunden wird. Dadurch wird die Entstickung der metallischen Schmelze erreicht. Durch teilweise Ablagerung der so gebildeten Titanverbindungen an den Innenwänden der feuerfesten Ausmauerung der Öfen, insbesondere im Gestell der Hochöfen, wird die Haltbarkeit der Ausmauerung erhöht. Natürlicher Ilmenit muß jedoch mit großem Aufwand gewonnen werden, wobei die natürlichen Ressourcen an hochwertigem Ilmenit verringert werden.

In der Z.: Stahl u. Eisen 100 (1980) Nr. 17, S. 1037 ist die Zugabe dosierter Mengen Titan in den Hochofen zur Verringerung des Verschleißes der Ausmauerung des Gestells beschrieben.

Aus der DE-C-43 04 724 ist ein titanhaltiger Zuschlagstoff für die Eingabe in Öfen zur Erhöhung der Haltbarkeit der feuerfesten Ausmauerung bekannt. Der Zuschlagstoff besteht aus Rückständen der TiO₂-Herstellung und einem oder mehreren der Bestandteile, ausgewählt aus Kohle oder kohlehaltigen Rückständen, Eisen, Eisenoxid, eisen- oder eisenoxidhaltigen Rückständen.

In der Eisen-, Stahl- und Gießerei-Industrie werden ferner Zuschlagstoffe als Schlackenbildner in die Öfen eingebracht. Die Zuschlagstoffe sind in der Natur vorkommende Verbindungen und Gemische, die z. B. die Oxide CaO, Al₂O₃, SiO₂ und MgO enthalten. Diese Zuschlagstoffe müssen für ihre Verwendung als Schlackenbildner teuer beschafft werden. Die LU-A-46 706 offenbart einen basischen Zuschlagstoff für basische Stahlherstellungsverfahren, bestehend aus basischen Schlackenbildnern, wie Erdalkali-, insbesondere Calciumoxid oder -carbonat und mindestens einem nichtbasischen Schlackenbildner, vorzugsweise SiO₂, TiO₂, Al₂O₃ oder Manganoxiden. Auf diese Weise soll eine frühzeitige Reaktionsfähigkeit der basischen Zuschlagstoffe bereits erreicht werden, wenn mit einem basischen Zuschlagstoff gearbeitet wird, der bei verhältnismäßig niedrigen Temperaturen schmelzflüssige Anteile aufweist.

Die Aufgabe der vorliegenden Erfindung ist es, die Zusammensetzung des eingangs angeführten titanhaltigen Zuschlagstoffs im Hinblick auf eine Erhöhung der Haltbarkeit der feuerfesten Ausmauerung der Öfen zu verbessern.

Diese Aufgabe wird dadurch gelöst, daß dem titanhaltigen Zuschlagstoff ein oder mehrere Bestandteile, ausgewählt aus erdalkalimetalloxid-, erdalkalihydroxid-, Al₂O₃-, Al(OH)₃-und SiO₂-haltigen Rückständen zugesetzt sind.

Diesen Rückständen können noch ein oder mehrere Bestandteile, ausgewählt aus Kohle, kohlehaltigen Rückständen, Eisen, Eisenoxid, eisen- und eisenoxidhaltigen Rückständen zugesetzt sein. Infolge der erfindungsgemäßen Verwendung der vorstehend aufgeführten Rückstände ist deren Deponierung nicht mehr erforderlich, was erhebliche Vorteile mit sich bringt.

Bevorzugte Zusammensetzungen des erfindungsgemäßen titanhaltigen Zuschlagstoffs sind in den Ansprüchen 3, 4 und 5 wiedergegeben.

Der erfindungsgemäß zusammengesetzte titanhaltige Zuschlagstoff eignet sich nicht nur zur Reparatur dünner feuerfester Auskleidungen in Öfen, sondern dient auch als ausgezeichneter Schlackenbildner. Mit CaO-haltigen Rückständen werden sehr gute Ergebnisse bei der Einstellung der Schlackenbasizität erzielt. Dabei wird in hohem Maße die Abbindung von Schwefel und Phosphor als calciumhaltige Schwefel- und Phosphorverbindungen erreicht. Durch die Zugabe von MgO-haltigen Rückständen werden zusätzlich gute Ergebnisse bei der Erhöhung des Sättigungsgrads in der gebildeten Schlacke erhalten. Auf diese Weise wird vermieden, daß MgO-Gehalte aus der feuerfesten Ausmauerung heraus gelöst werden. Al₂O₃- und Al(OH)₃-haltige Rückstände eignen sich ebenfalls als guter Schlackenbildner. Sehr gute Ergebnisse zeigen diese Rückstände als Flußmittel für Kalkschlacke, wobei eine Beschleunigung der Auflösung von Kalk erreicht wird. Als ausgezeichneter Schlackenbildner haben sich auch SiO₂-haltige Rückstände erwiesen.

Die titanhaltigen Zuschlagstoffe sind nach einer Ausgestaltung der Erfindung Pulvergemische mit einer Korngröße von 50 bis 5000 µm.

Eine weitere Ausgestaltung der Erfindung ist ein titanhaltiger Zuschlagstoff in Form von Sinterkörpern, die dadurch hergestellt werden, daß die Bestandteile gemischt, das homogene Gemisch in eine Sinterform gegeben und anschließend in an sich bekannter Weise gesintert wird. Das Sintergut kann auf die gewünschte Größe gebrochen werden. Die Sinterkörper zeigen neben einer guten Bruchfestigkeit sehr gute Ergebnisse als Schlackenbildner.

Eine weitere Ausgestaltung der Erfindung ist darin zu sehen, daß die titanhaltigen Zuschlagstoffe in Form von einem oder mehrere Bindemittel enthaltenden Briketts, Pellets oder Granulaten vorliegen, die eine sehr gute Bruchfestigkeit besitzen. Die Formkörper können bei Temperaturen von 100°C bis 1000°C nachbehandelt werden. Die als Briketts ausgebildeten Formkörper sind zylinderförmig rund, oval, quaderförmig oder kubisch gestaltet.

Der Bindemittelgehalt der hergestellten Formkörper beträgt 2 bis 30 Gew.-%.

Die Erfindung wird im folgenden anhand eines Beispiels näher erläutert:

In einem Mischer wurden 50 Gew.-% Aufschlußrückstand aus der TiO₂-Pigment-Herstellung nach dem Sulfatverfahren, enthaltend 50 Gew.-% TiO₂, 23 Gew.-% SiO₂, 5 Gew.-% Al₂O₃, 6 Gew.-% CaO und 5 Gew.-% Fe203 sowie 12 Gew.-% CaO-haltiger Rückstand mit 95 Gew.-% CaO-Gehalt (berechnet auf die Trockensubstanz) und 18 Gew.-% MgO-haltiger Rückstand mit 89 Gew.-% MgO-Gehalt (berechnet auf die Trockensubstanz) gegeben. Dann wurden unter Rühren 13 Gew.-% Hochofenzement, enthaltend 51 Gew.-% CaO, 27 Gew.-% SiO₂, 4,5 Gew.-% Al₂O₃, 4,5 Gew.-% TiO₂, 1,5 Gew.-% Fe₂O₃, 0,5 Gew.-% Mn₂O₃ und 3,5 Gew.-% MgO sowie 1,5 Gew.-% Elektrofilterasche, enthaltend 50 Gew.-% SiO₂, 28 Gew.-% Al₂O₃, 7 Gew.-% Fe₂O₃, 3,2 Gew.-% CaO, 2,2 Gew.-% MgO, 3,8 Gew.-% K₂O und 0,9 Gew.-% Na₂O sowie 5,5 Gew.-% Tonerdezement, enthaltend 40 Gew.-% CaO, 6,5 Gew.-% SiO₂, 25 Gew.-% A1203, 25 Gew.-% TiO₂, 1,0 Gew.-% Fe₂O₃, 0,1 Gew.-% Mn₂O₃ und 1,0 Gew.-% MgO dazugegeben und das Gemisch 5 Minuten innig gemischt. 50 Gew.-Teile dieses Gemisches wurden mit 50 Gew.-Teilen Waser vermischt. Das wäßrige Gemisch wurde 2 Minuten homogenisiert. Das homogene Gemisch wurde auf eine Brikettpresse gegeben. In der Brikettpresse wurde ein Druck von 120 bar eingestellt, wobei zylinderförmige Formkörper (Briketts) mit einem Außendurchmesser von 80 mm und einer Länge von 40 mm erhalten wurden. Nach einer Abbindezeit von 14 Tagen wiesen die erhaltenen Formkörper eine Bruchfestigkeit von 2950 N und eine Bruchfestigkeit nach eineinhalbstündigem Erhitzen auf 1000°C in 100%iger CO-Atmosphäre von 3150 N auf. Die zylinderförmigen Formkörper (Briketts) wiesen die folgende Zusammensetzung auf.

| **Bestandteile** | **Anteile Gew.-%** |
|---|---|
| TiO₂ | 25,1 |
| SiO₂ | 25,9 |
| MgO | 16,4 |
| CaO | 22,8 |
| Al₂O₃ | 5,2 |
| Fe₂O₃ | 2,5 |
| Na | 0,1 |
| K | 0,07 |
| **Restbestandteile** | 1,93 |

Zur Bestimmung der Bruchfestigkeit (Punktfestigkeit) wurden die Formkörper in einer Prüfpresse einer kontinuierlich zunehmenden, auf sie einwirkenden Kraft bis zum Bruch ausgesetzt. Die beim Brechen auf die Formkörper einwirkende Kraft gilt als Maß für deren Bruchfestigkeit.

## Patentansprüche

1. Titanhaltiger Zuschlagstoff für die Zufuhr in Öfen mit feuerfester Ausmauerung für schmelzmetallurgische Prozesse, bestehend aus Rückständen der TiO₂-Herstellung und gegebenenfalls aus einem oder mehreren Bindemitteln, ausgewählt aus Portlandzement, Hochofenzement, Tonerdezement, Flugasche oder Elektrofilterasche und sonstigen hydraulischen, keramischen oder chemischen Bindemitteln, gekennzeichnet durch den Zusatz von einem der mehreren Bestandteilen, ausgewählt aus erdalkalimetalloxid-, erdalkalimetallhydroxid-, Al₂O₃, Al(OH)₃, und SiO₂-haltigen Rückständen.

2. Titanhaltiger Zuschlagstoff nach Anspruch 1, gekennzeichnet durch den Zusatz von einem oder mehreren Bestandteilen, ausgewählt aus Kohle, kohlehaltigen Rückständen, Eisen, Eisenoxid, eisen- und eisenoxidhaltigen Rückständen.

3. Titanhaltiger Zuschlagstoff nach einem der Ansprüche 1 und 2, bestehend aus 50 bis 95 Gew.-% Rückständen der TiO₂-Herstellung und 5 bis 50 Gew.-% eines oder mehrerer Bestandteile, ausgewählt aus erdalkalimetalloxid-, erdalkalimetallhydroxid-, Al₂O₃-, Al(OH)₃- und SiO₂ haltigen Rückständen.

4. Titanhaltiger Zuschlagstoff nach einem der Ansprüche 1 bis 3, bestehend aus 30 bis 70 Gew.-% Rückständen der TiO₂-Herstellung, 5 bis 50 Gew.-% Kohle und/oder kohlehaltigen Rückständen und 20 bis 65 Gew.-% eines oder mehrerer Bestandteile, ausgewählt aus erdalkalimetalloxid-, erdalkalimetallhydroxid-, Al₂O₃-, Al(OH)₃- und SiO₂-haltigen Rückständen.

5. Titanhaltiger Zuschlagstoff nach einem der Ansprüche 1 bis 3, bestehend aus 30 bis 70 Gew.-% Rückständen der TiO₂-Herstellung, 5 bis 50 Gew.-% Eisen und/oder Eisenoxid und/oder eisen- und/oder eisenoxidhaltigen Rückständen und 20 bis 65 Gew.-% eines oder mehrerer Bestandteile, ausgewählt aus erdalkalimetalloxid-, erdalkalimetallhydroxid-, Al₂O₃-, Al(OH)₃- und SiO₂-haltigen Rückständen.

6. Titanhaltiger Zuschlagstoff nach eine der Ansprüche 1 bis 5 in Form von Pulvergemischen mit einer Korngröße von 50 bis 5000 µm.

7. Titanhaltiger Zuschlagstoff nach einem der Ansprüche 1 bis 6 in Form von Sinterkörpern.

8. Titanhaltiger Zuschlagstoff nach einem der Ansprüche 1 bis 6 in Form von ein oder mehrere Bindemittel enthaltenden Briketts, Pellets oder Granulaten.

9. Titanhaltiger Zuschlagstoff nach Anspruch 8, enthaltende 2 bis 30 Gew.-% Bindemittel.

## Claims

1. Titanium-containing aggregate for feeding into furnaces that have a refractory lining for smeltingmetallurgical processes, the aggregate consisting of residues from TiO₂-production and, if applicable, of one or more binding agents selected from Portland cement, blast-furnace cement, aluminous cement, fly ash or electrostatic-filter ash and other hydraulic, ceramic or chemical binding agents, characterised by the addition of one or more constituents selected from residues containing alkaline earth metal oxide-, alkaline earth metal hydroxide-, Al₂O₃-, Al(OH)₃- and SiO₂- containing residues.

2. Titanium-containing aggregate according to claim 1, characterised by the addition of one or more constituents selected from coal, carbonaceous residues, iron, iron oxide, residues containing iron and residues containing iron oxide.

3. Titanium-containing aggregate according to one of claims 1 and 2, consisting of 50 to 95 % by weight of residues from TiO₂-production and 5 to 50 % by weight of one or more constituents selected from alkaline earth metal oxide-, alkaline earth metal hydroxide-, Al₂O₃-, Al(OH)₃- and SiO₂- containing residues.

4. Titanium-containing aggregate according to one of claims 1 to 3, consisting of 30 to 70 % by weight residues from TiO₂-production, 5 to 50 % by weight coal and/or carbonaceous residues and 20 to 65 % by weight of one or more constituents selected from residues containing alkaline earth metal oxide-, alkaline earth metal hydroxide-, Al₂O₃-, Al(OH)₃- and SiO₂- containing residues.

5. Titanium-containing aggregate according to one of claims 1 to 3, consisting of 30 to 70 % by weight residues from TiO₂-production, 5 to 50 % by weight iron and/or iron oxide and/or residues containing iron and/or residues containing iron oxide and 20 to 65 % by weight of one or more constituents selected from residues containing alkaline earth metal oxide-, alkaline earth metal hydroxide-, Al₂O₃-, Al(OH)₃- and SiO₂- containing residues.

6. Titanium-containing aggregate according to one of claims 1 to 5 in the form of powder mixtures having a grain size of 50 to 5000 µm.

7. Titanium-containing aggregate according to one of claims 1 to 6 in the form of sintered compacts.

8. Titanium-containing aggregate according to one of claims 1 to 6 in the form of briquettes, pellets or granules containing one or more binding agents.

9. Titanium-containing aggregate according to claim 8, containing 2 to 30 % by weight binding agent.

## Revendications

1. Charge contenant du titane pour l'introduction dans des fours à garnissage réfractaire pour des processus métallurgiques de fusion, constituée de résidus de la production du TiO₂ et éventuellement d'un ou plusieurs liants choisis parmi le ciment Portland, le ciment de haut-fourneau, le ciment alumineux, la cendre volante ou la cendre d'électrofiltre et d'autres liants hydrauliques, céramiques ou chimiques, caractérisée par l'addition d'un ou plusieurs composants choisis parmi des résidus contenant des oxydes de métaux alcalino-terreux, des hydroxydes de métaux alcalino-terreux, Al₂O₃, Al(OH)₃ et SiO₂.

2. Charge contenant du titane selon la revendication 1, caractérisée par l'addition d'un ou plusieurs composants choisis parmi le charbon, des résidus contenant du charbon, le fer, un oxyde de fer, des résidus contenant du fer et des résidus contenant des oxydes de fer.

3. Charge contenant du titane selon la revendication 1 ou 2, constituée de 50 à 95 % en poids de résidus de la production du TiO₂ et de 5 à 50 % en poids d'un ou plusieurs composants choisis parmi des résidus contenant des oxydes de métaux alcalino-terreux, des hydroxydes de métaux alcalino-terreux, Al₂O₃, Al(OH)₃ et SiO₂.

4. Charge contenant du titane selon l'une des revendications 1 à 3, constituée de 30 à 70 % en poids de résidus de la production du TiO2, de 5 à 50 % en poids de charbon et/ou de résidus contenant du charbon et de 20 à 65 % en poids d'un ou plusieurs composants choisis parmi des résidus contenant des oxydes de métaux alcalino-terreux, des hydroxydes de métaux alcalino-terreux, Al₂O₃, Al(OH)₃ et SiO₂.

5. Charge contenant du titane selon l'une des revendications 1 à 3, constituée de 30 à 70 % en poids de résidus de la production du TiO₂, de 5 à 50 % en poids de fer et/ou d'oxyde de fer et/ou de résidus contenant du fer et/ou des oxydes de fer et de 20 à 65 % en poids d'un ou plusieurs composants choisis parmi des résidus contenant des oxydes de métaux alcalino-terreux, des hydroxydes de métaux alcalino-terreux, Al₂O₃, Al(OH)₃ et SiO₂.

6. Charge contenant du titane selon l'une des revendications 1 à 5, sous forme de mélanges pulvérulents ayant une taille de particules de 50 à 5 000 µm.

7. Charge contenant du titane selon l'une des revendications 1 à 6, sous forme de corps frittés.

8. Charge contenant du titane selon l'une des revendications 1 à 6, sous forme de briquettes, pastilles ou produits granulés, contenant un ou plusieurs liants.

9. Charge contenant du titane selon la revendication 8, contenant de 2 à 30 % en poids de liant.
